# EUROPEAN PATENT APPLICATION

(11) **EP 1 662 715 A1**
(43) Date of publication of application: **31.05.2006**
(21) Application number: 04028276.6
(22) Date of filing: 29.11.2004
(51) Int. Cl.: H04L 12/56

(54) **Method and apparatus for providing ingress traffic shaping**

(71) Applicant: SIEMENS AKTIENGESELLSCHAFT, 80333 München (DE)
(72) Inventor: Lee, Seungdong, Eunpyeong Seoul 122-751 (KR)

(57) **Abstract**

The present invention generally relates to traffic shaping and bandwidth management in a communications network. More particularly, the present invention relates to a method for shaping the ingress traffic received at a first device. The invention also relates to a novel apparatus comprising a first network device, wherein the first network device receives ingress traffic to be traffic shaped. In essence, existing switching chipsets can be used to implement ingress traffic shaping for a first port (110) by connecting the first port serially to a second port (120) and then using well-known egress traffic shaping methods at the second port (120). Egress traffic shaping, unlike ingress traffic shaping, is a technique readily available for existing chipsets so that, according to the invention, ingress traffic shaping can be achieved at the expense of an additional port per connection.

## Description

The present invention generally relates to traffic shaping and bandwidth management in a communications network. More particularly, the present invention relates to a method for shaping the ingress traffic received at a first device. The invention also relates to a novel apparatus comprising a first network device, wherein the first network device receives ingress traffic to be traffic shaped.

In the past, TDM (Time Division Multiplex) based networks such as the PSTN (Public Switched Telecommunications Network) have been employed to provide both telephony and data services to subscribers.

As modern telecommunication services, especially data applications such as video on demand, require a much higher bandwidth than deliverable over legacy TDM based leased lines, the telecommunications industry has begun to explore faster and yet less expensive networking techniques for providing services to subscribers.

Among these networking techniques that may potentially be applied in a telecommunications network is the well known Ethernet, a packet based computer networking technology mainly used in LANs (Local Area Networks). Ethernet is available at bandwidths of 10 Mbps, 100 Mbps, 1 Gbps and 10 Gbps. Especially the current 100 Mbps and 1 Gbps devices such as NICs (Network Interface Cards), routers, and other infrastructure-type equipment, are inexpensive and readily available through a multitude of suppliers.

In Metropolitan Area Networks (MANs), or Metro Networks, Ethernet is increasingly used as a transport technique. When, for example in the context of a Ethernet-type MAN, a service provider wishes to replace or supplement the legacy TDM lines with Ethernet service, the provider is faced with the challenge of limiting the bandwidth a subscriber is entitled to use. The service provider wishes to open only a small portion of the physical bandwidth.

If, for example, a subscriber only subscribes to voice services, this subscriber will be provided with a bandwidth which will allow TDM-equivalent voice transmission, such as 64kbps, which is only a fraction of the physically available bandwidth of 100 Mbps or 1 Gbps.

More bandwidth, for example 1..8 Mbps, may be made available to subscribers who subscribe to data services, which is usually still only a fraction of the physically available bandwidth. The hierarchical structure of networks usually prohibit the provision of the full bandwidth to subscribers as this would mean that the provider's entire (backbone) network needs to be capable of handling the full subscriber line bandwidth for perhaps half of the provider's subscribers simultaneously during the busy hour. This would require an expensive backbone infrastructure, something which residential subscribers are not ready to pay for.

In consequence, to minimize cost for the backbone infrastructure, there is a demand for maximum bandwidth provisioning on packet based lines to subscribers.

For traffic to the subscriber, also called outgoing, or egress, traffic, a method called traffic shaping can be easily implemented because most, if not all, Ethernet devices comprise queuing means and scheduling means that can be complemented by a bandwidth measurement and control means to effect traffic shaping and bandwidth control. In principle, traffic shaping utilizes the queuing and scheduling means to buffer and queue packets in excess of the provisioned bandwidth. An advantage thereof is that traffic shaping is less likely to drop excess packets since excess packets are buffered. Traffic shaping typically avoids retransmissions due to dropped packets. The result of traffic shaping is a smoothed packet output rate better utilizing the available (provisioned) bandwidth.

Another bandwidth control method is known as policing. Traffic policing simply measures the bandwidth and discards packets that are in excess of the provisioned bandwidth. Traffic policing does not require queuing and scheduling means. Traffic policing, however, propagates bursts and drops excess packets, throttling TCP window sizes and reducing the overall output rate of affected traffic streams. Bursts may lead to excess packet drops and throttle the overall output rate, particularly with TCP-based flows.

A more detailed discussion on the differences, advantages and disadvantages of the two bandwidth limiting methods is given in Cisco Tech Notes, Document ID 19645, entitled "*Comparing Traffic Policing and Traffic Shaping for Bandwidth Limiting*", updated December 17, 2003, available at
http://www.cisco.com/warp/public/105/policevsshape.html.

Unfortunately, traffic shaping is only available for outbound, or egress, traffic. For traffic received from the subscriber, or ingress traffic, only traffic policing is possible. It is, however, highly desirable to provide traffic shaping also for ingress, or inbound, traffic, in order to enhance service quality, as traffic shaping can avoid unexpected packet loss and a resulting degradation of TCP throughput, as explained above.

One method for shaping the ingress traffic at the network infrastructure, which is the egress traffic to the CPE (Customer Premises Equipment), would be to implement egress traffic shaping in the CPE. This would, however, require the provider's control over its subscribers' CPE, which in turn would require a controllable CPE. Such controllable CPE would be more expensive than ordinary CPE, and it would also limit the subscribers' choice of CPE. Further, precautions would have to be taken to prevent subscribers from manipulating the egress traffic shaping of their CPE. Consequently, using the CPE's egress traffic shaping capabilities is a problematic approach to network infrastructure ingress traffic shaping.

It is therefore an objective of the present invention to provide, in a first network device connected to a second network device, a method for shaping the ingress traffic received over said connection wherein the ingress traffic shaping is independent of any egress traffic shaping in the second device.

In accordance with this objective, there is provided by the invention, in a first network device connected to a second network device, a method for shaping the ingress traffic received at a first port of said first device over said connection, comprising the steps of:
- providing at least a second port associated with the first device such that the ingress traffic to the first port is routed via the second port, wherein the second port is independent of the second device; and
- providing ingress traffic shaping for the first port by applying egress traffic shaping to the second port.

In accordance with this objective, there is also provided by the invention an apparatus comprising a first network device, the apparatus connected to a second network device, wherein the first network device comprises a first port for receiving ingress traffic received over said connection, the apparatus further comprising:
- a second port such that the ingress traffic to the first port is routed via the second port; and
- means for providing ingress traffic shaping for the first port by applying egress traffic shaping to the second port.

Advantageous embodiments of the invention are set forth in the dependent claims.

An advantage of the present invention lies in that existing switching chipsets can be used to implement ingress traffic shaping for a first port by connecting the first port serially to a second port and then using well-known egress traffic shaping methods at the second port. Egress traffic shaping, unlike ingress traffic shaping, is a technique readily available for existing chipsets so that, according to the invention, ingress traffic shaping can be achieved at the expense of an additional port per connection.

Using the invention, the ingress traffic shaping at the first device is independent of the second device's egress traffic shaping, which is useful when the second device is, for example, not fully under the network operator's control, as is the case with CPE in a communications network.

The additional cost incurred by using two ports per connection instead of one is negligible in relation to the gain in control over the ingress bandwidth and traffic shape, especially when inexpensive 100 Mbps ports are used. In general, the inventive method and apparatus are inexpensive since the per-port cost on modern Ethernet devices is very low.

In the following, embodiments of the invention will be described with reference to the drawings, wherein:
Fig. 1 shows a pass-through implementation of the present invention;
Fig. 2 shows a partial pass-through implementation of the present invention;
Fig. 3 shows an integrated partial pass-through implementation with external loop; and
Fig. 4 shows an integrated partial pass-through implementation with internal loop.

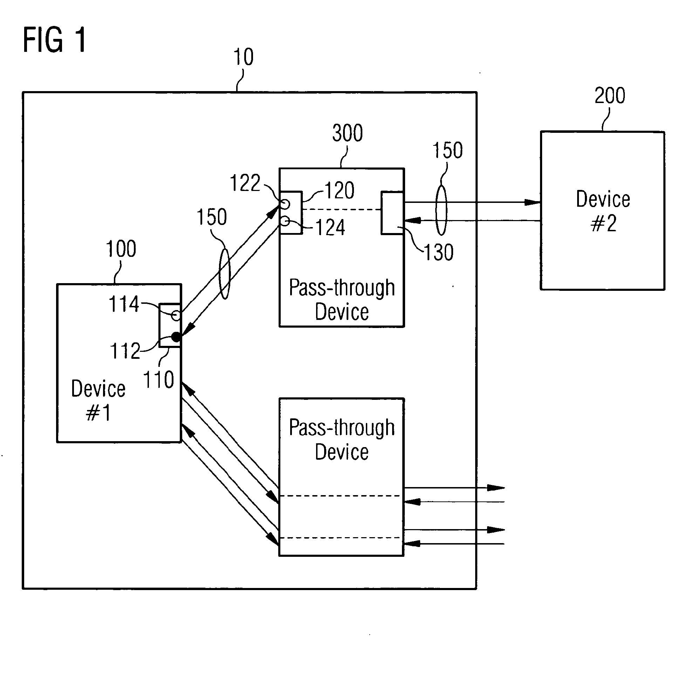

Fig. 1 shows a first embodiment of the invention. A network arrangement comprises a first network device 100 and a second network device 200 and a connection 150 connecting said network devices.

In a preferred embodiment, the network devices are Ethernet-capable devices connected by means of an Ethernet connection, wherein said network arrangement may be a portion of a Metropolitan Area Network (MAN) with the first device being a network access device run by a network access provider and the second device being the Customer Premises Equipment (CPE).

The first device will typically comprise a plurality of bidirectional ports for providing network connections to several other network devices. One such port is shown as the first port 110. While egress traffic from the first device 100 can be traffic shaped using well known methods at a transmit portion 114 of said first port 110, the receiving portion 112 of said port one can only provide traffic policing, a method where excess traffic is discarded.

According to the embodiment of Fig. 1, there is provided a pass-through device 300, said pass-through device typically installed near the first device 100 in a common apparatus, and said pass-through device having a second interface 120 for interfacing with the first device and a third interface 130 for interfacing with the second device.

Pass-through device 300 passes on or relays traffic between devices 100 and 200. Traffic from first device 100 to second device 200, or egress traffic, which is traffic-shaped by the transmit portion 114 of first port 110, is passed through device 300 without any modification, ensuring minimal pass-through delay. In an alternative embodiment (not shown), the egress traffic may be traffic-shaped by the third port's transmit portion, while the first port does not provide an egress traffic shaping.

Ingress traffic to first device 100 will be subject to traffic shaping at second port 120, which traffic shaping will be under the control of pass-through device 300, which in turn may be controlled by the first network device's controller or a common controller (not shown) associated with apparatus 10. By providing egress traffic shaping at the second port 120, said second port interfacing with the first port 110, ingress traffic shaping for said first port 110 is effected.

In a practical Ethernet apparatus 10, the device 100 may be the main switching chipset comprising all chipset features, while pass-through device 300 may be implemented using a low cost auxiliary or subsidiary chipset with a much smaller feature set. Pass-through device 300 may also be implemented using two ports of the main switching chipset, effectively integrating pass-through device 300 into device 100.

The first embodiment provides for IEEE 802.1Q tag transparency and allows for port based VLAN support. The first embodiment also supports half- and full duplex network connections.

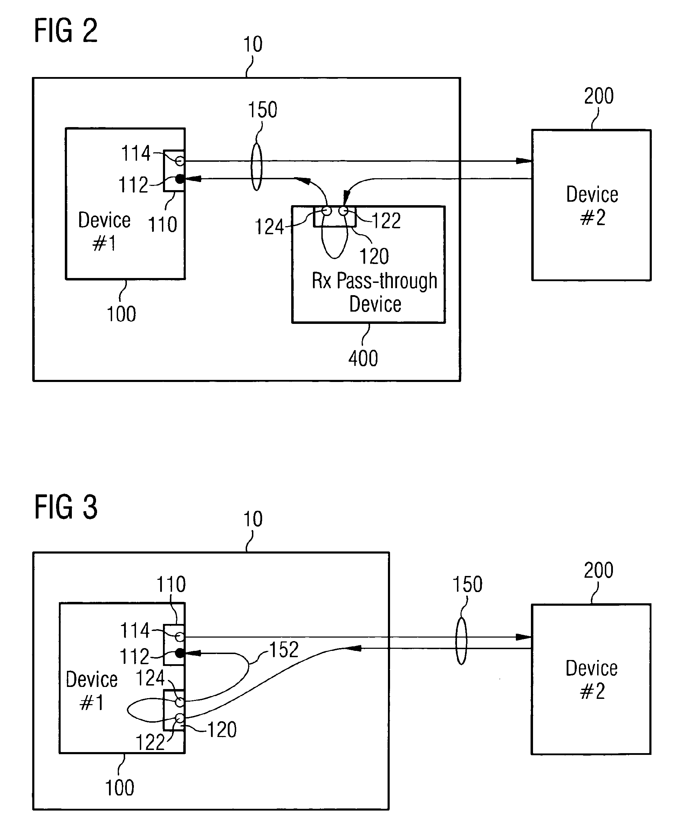

Turning now to Fig. 2, there is shown a second embodiment of the invention wherein the full pass-through device 300 from Fig. 1 is replaced by Rx pass-through device 400. Rx pass-through device 400 is only connected to the receive, or Rx, portion of connection 150 (Rx as seen from the first device 100). Consequently, the Rx pass-through device 400 only requires one additional port 120 instead of two. Receive portion 122 of Rx pass-through device 400 interfaces with second device 200, while transmit portion 124 interfaces with receive portion 112 of the first device's first port 110. Tx portion of connection 150 is not connected to the Rx pass-through device 400.

As with full pass-through device 300, ingress traffic to first device 100 will be subject to traffic shaping at second port 120, which traffic shaping will be under the control of Rx pass-through device 400, which in turn may be controlled by the first network device's controller or a common controller (not shown) associated with apparatus 10. By providing egress traffic shaping at the Tx portion 124 of second port 120, said Tx portion interfacing with first port 110, ingress traffic shaping for said first port 110 is effected.

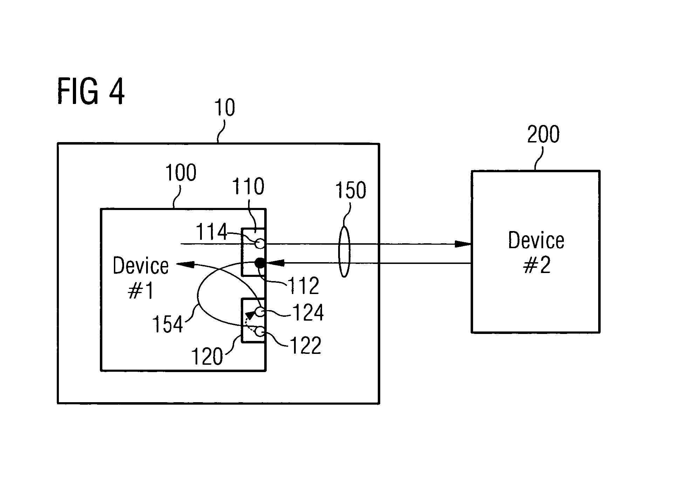

In a practical Ethernet apparatus 10, Rx pass-through device 400 may be implemented using a low cost auxiliary or subsidiary chipset with a small feature set. Rx pass-through device 400 may also be implemented using one port of the main switching chipset, effectively integrating Rx pass-through device 400 into device 100, as shown below with reference to Figs. 3 and 4.

The second embodiment requires some additional measures to ensure that the second port 120 is transparent to the network in that traffic sent from second device 200 to first device 100 can be addressed correctly. The second embodiment also requires additional measures if half-duplex operation is desired since Rx path and Tx path differ.

With reference to Figs. 3 and 4, there are shown two embodiments of the inventions wherein the Rx pass through device 400 is integrated into device 100, so that additional ports at device 100 may be utilized a second ports 120.

A straightforward approach of integrating Rx pass through device 400 into device 100 is shown in Fig. 3. First device 100 now comprises first and second ports 110, 120, while the Rx portion of connection 150 still terminates at Rx portion 122 of second port 120 and ingress traffic shaping is provided by applying egress traffic shaping at second port's transmit portion 124, which interfaces with Rx portion 112 of port 110. The connection between ports 110 and 120 is effected by external connection 152, as shown in Fig. 3, or by connection internal to first device 100 (not shown).

As with the second embodiment, the embodiment according to Fig. 3 also requires some additional measures to ensure that the second port 120 is transparent to the network in that traffic sent from second device 200 to first device 100 can be addressed correctly. Again, additional measures are required if half-duplex operation is desired since Rx path and Tx path differ.

Fig. 4 shows an embodiment in which Rx portion of connection 150 terminates at Rx portion of first port 110, from where ingress traffic is routed, preferably internally, e.g. via connection 154, to second port 120 which will then pass on the ingress traffic to some switching logic or interface (not shown) usually located behind first port 110. Traffic shaping is again provided by applying egress traffic shaping to the Tx portion 124 of second interface 120, effectively providing ingress traffic shaping for traffic received at first device 110.

The embodiment in accordance with Fig. 4 allows half- or full-duplex operation. A forwarding database entry may be employed to provide the internal routing from first port to second port.

While Ethernet was used an example to illustrate the embodiments of the present invention, application of the invention is not limited to Ethernet network arrangements. It will be readily apparent to those with skills in the art what other protocols may be used in conjunction with the teachings of the present invention to provide cost effective ingress traffic shaping.

## Claims

1. In a first network device (100) connected to a second network device (200), a method for shaping the ingress traffic received at a first port (110) of said first device (100) over said connection (150), comprising the steps of:
- providing at least a second port (120) associated with the first device (100) such that the ingress traffic to the first port (110) is routed via the second port (120), wherein the second port (120) is independent of the second device (200); and
- providing ingress traffic shaping for the first port by applying egress traffic shaping to the second port (120).

2. The method according to claim 1, wherein a pass-through device (300) is provided comprising said second port (120) for connecting the pass-through device to the first device (100) and a third port (130) for connecting the pass-through device (300) to the second device (200), and wherein the ingress traffic shaping for the first port (110) is provided, in the pass-through device (300), by applying egress traffic shaping to the second port (120).

3. The method according to claim 1, wherein a Rx pass-through device (400) is provided comprising a transmit portion (124) of said second port (120) for connecting the Rx pass-through device (400) to a receive portion (112) of the first port (110) and a receive portion (122) of said second port (120) for connecting the Rx pass-through device (400) to a transmit portion of the second device (200), and wherein the ingress traffic shaping for the first port (110) is provided, in the Rx pass-through device (400), by applying egress traffic shaping to the transmit portion (124) of the second port (120).

4. The method according to claim 3, wherein the Rx pass through device and the second port (120) are integrated into the first device (100) and wherein the ingress traffic shaping for the first port (110) is provided, in the first device (100), by applying egress traffic shaping to the transmit portion (124) of the second port (120).

5. The method according to claim 4, wherein an external connection (152) is provided between the first and second port.

6. The method according to claim 4, wherein an internal connection (154) is provided between the first and second port.

7. The method according to any of the claims 1 through 6, wherein said devices (100, 200, 300, 400) are Ethernet devices and wherein said connection (150) is an Ethernet connection.

8. An apparatus (10) comprising a first network device (100), the apparatus (10) connected to a second network device (200), wherein the first network device (100) comprises a first port (110) for receiving ingress traffic received over said connection (150), the apparatus (10) further comprising:
- a second port (120) such that the ingress traffic to the first port (110) is routed via the second port (120); and
- means for providing ingress traffic shaping for the first port (110) by applying egress traffic shaping to the second port (120).

9. The apparatus (10) according to claim 8, further comprising a pass-through device (300), the pass-through device comprising:
- said second port (120) for connecting the pass-through device (300) to the first device (100);
- a third port (130) for connecting the pass-through device (300) to the second device (200); and
- said means for providing ingress traffic shaping for the first port (110).

10. The apparatus (10) according to claim 8, further comprising an Rx pass-through device (400), the Rx pass-through device comprising:
- a transmit portion (124) of said second port (120) for connecting the Rx pass-through device (400) to a receive portion (112) of the first port (110);
- a receive portion (122) of said second port (120) for connecting the Rx pass-through device (400) to a transmit portion of the second device (200); and
- said means for providing ingress traffic shaping for the first port (110), wherein ingress traffic shaping is provided by applying egress traffic shaping to the transmit portion (124) of the second port (120).

11. The apparatus (10) according to claim 10, wherein the Rx pass through device and the second port are integrated into the first device (100) and wherein the ingress traffic shaping for the first port (110) is provided, in the first device (100), by applying egress traffic shaping to the transmit portion (124) of the second port (120).

12. The apparatus according to claim 11, wherein an external connection (154) is provided between the first and second port.

13. The apparatus according to claim 11, wherein an internal connection (154) is provided between the first and second port.

14. The apparatus according to any of the claims 8 through 13, wherein said devices (100, 200, 300, 400) are Ethernet devices and wherein said connection (150) is an Ethernet connection.
